# EUROPÄISCHE PATENTANMELDUNG

(11) **EP 1 967 310 A1**
(43) Veröffentlichungstag der Anmeldung: **10.09.2008**
(21) Anmeldenummer: 08004282.3
(22) Anmeldetag: 07.03.2008
(51) Int. Cl.: B23D 59/00, B27B 9/00, B23D 47/00, B27B 5/38, B27G 19/04, B27F 5/02

(54) **Handkreissäge**

(30) Priorität: 07.03.2007 DE 102007011168
(71) Anmelder: Mafell AG, 78727 Oberndorf a.N. (DE)
(72) Erfinder: Krauss, Matthias, 78737 Fluorn-Winzeln (DE); Lauckner, Helmut, 72172 Sulz a.N. (DE); Zimmermann, Horst, 72160 Horb-Betra (DE)
(74) Vertreter: Manitz, Finsterwald & Partner GbR

(57) **Zusammenfassung**

Die Erfindung betrifft eine Handkreissäge, insbesondere Tauchsäge oder Pendelhaubensäge, mit einem Sägeblatt (11), einer Antriebseinheit (13) für das Sägeblatt (11) und einem das Sägeblatt (11) wenigstens teilweise umgebenden Gehäuse, das zumindest einen Funktionsabschnitt (17) umfasst, der relativ zu einem Basisabschnitt (15) der Säge zwischen einer Öffnungsstellung, in der ein Befestigungsbereich des Sägeblatts (11) zugänglich ist, und einer Schließstellung bewegbar ist.

## Beschreibung

Die Erfindung betrifft eine Handkreissäge, insbesondere eine Tauchsäge oder Pendelhaubensäge, mit einem Sägeblatt, einer Antriebseinheit für das Sägeblatt und einem das Sägeblatt wenigstens teilweise umgebenden Gehäuse.

Derartige Handkreissägen sind grundsätzlich bekannt. Das Gehäuse schützt den Benutzer vor dem Sägeblatt und verhindert, dass Sägespäne unkontrolliert in die Umgebung gelangen. Aus Verschleißgründen oder aufgrund der Beschaffenheit eines zu bearbeitenden Werkstücks sind in der Praxis Wechsel des Sägeblatts erforderlich, die vor allem deshalb als störend empfunden werden, da es teilweise äußerst umständlich ist, das Sägeblatt aus dem Gehäuse zu entnehmen. Des Weiteren ist eine Reinigung der Säge insbesondere im Bereich des Gehäuses oft schwierig durchführbar.

Aufgabe der Erfindung ist es, eine Handkreissäge der eingangs genannten Art derart weiterzubilden, dass sie möglichst einfach zu handhaben ist und insbesondere ein schnelles und einfaches Wechseln des Sägeblatts ermöglicht.

Die Lösung dieser Aufgabe erfolgt durch die Merkmale des Anspruchs 1 und insbesondere dadurch, dass das Gehäuse zumindest einen Funktionsabschnitt umfasst, der relativ zu einem Basisabschnitt der Säge zwischen einer Öffnungsstellung, in der ein Befestigungsbereich des Sägeblatts zugänglich ist, und einer Schließstellung bewegbar ist.

Die erfindungsgemäße Ausgestaltung des Gehäuses erlaubt einen schnellen Zugang in das Gehäuseinnere und somit zu dem innerhalb des Gehäuses gelegenen Befestigungsbereich des Sägeblatts. Für einen Sägeblattwechsel braucht lediglich der Funktionsabschnitt bewegt zu werden. Weder eine Demontage des gesamten Gehäuses noch eine umständliche Entnahme des Sägeblatts sind erforderlich. Des Weiteren kann aufgrund des bewegbaren Funktionsabschnitts die Säge insbesondere im Bereich des Gehäuses auf einfache Weise gereinigt werden.

Vorzugsweise ist erfindungsgemäß vorgesehen, dass das Gehäuse zumindest zweiteilig ausgebildet ist und zusätzlich zu dem Funktionsabschnitt wenigstens einen stationären Basisabschnitt umfasst, relativ zu welchem der Funktionsabschnitt zwischen einer Schließstellung, in der das Gehäuse geschlossen ist, und einer Öffnungsstellung bewegbar ist, in welcher der Befestigungsbereich des Sägeblatts zugänglich ist.

Insbesondere sind erfindungsgemäß genau ein Basisabschnitt und genau ein Funktionsabschnitt vorgesehen, wodurch Aufbau und Handhabung der Säge besonders einfach sind.

Ferner ist vorzugsweise vorgesehen, dass die Handkreissäge als Tauchsäge ausgebildet und das Sägeblatt zu einer Tauchbewegung relativ zu einer Grundplatte der Säge in der Lage ist, wobei das Gehäuse während der Tauchbewegung des Sägeblatts relativ zu der Grundplatte feststehend angeordnet ist. Ein derartiges stehendes Gehäuse ist hinsichtlich Herstellung und Handhabung der Säge von Vorteil. Außerdem erlaubt ein stehendes Gehäuse eine besonders effiziente Auslegung der Absaugung von Spänen aus dem Gehäuse.

Weitere vorteilhafte Weiterbildungen der Erfindung sind auch in den abhängigen Ansprüchen, der Beschreibung sowie der Zeichnung angegeben.

Insbesondere ist vorgesehen, dass bei in der Öffnungsstellung befindlichem Funktionsabschnitt der Befestigungsbereich des Sägeblatts unmittelbar zugänglich ist. Nach dem Öffnen des Gehäuses braucht somit lediglich die Befestigung des Sägeblatts gelöst und das Sägeblatt entfernt zu werden. Insbesondere sind erfindungsgemäß keine innerhalb des Gehäuses gelegenen Schutzeinrichtungen, Abdeckungen, Verkleidungen etc. für das Sägeblatt oder sonstige Funktionselemente vorgesehen, die vor der Entnahme des Sägeblatts erst noch gelöst, entfernt, in eine nicht störende Stellung bewegt etc. werden müssten.

In einer bevorzugten Ausgestaltung ist der Funktionsabschnitt unverlierbar angebracht. Hierdurch kann der Funktionsabschnitt bei geöffnetem Gehäuse nicht verloren gehen, was die Handhabbarkeit der Säge weiter verbessert und insbesondere einen Sägeblattwechsel wesentlich vereinfacht.

Vorzugsweise ist der Funktionsabschnitt relativ zu dem Basisabschnitt verschwenkbar. Dabei ist eine reine Schwenkbewegung nicht zwingend. Die Schwenkbewegung kann in einer weiteren Ausgestaltung mit einer oder mehreren Dreh- oder Translationsbewegungen kombiniert bzw. überlagert werden. Der Funktionsabschnitt kann nach Art eines Schwenkflügels ausgebildet sein, wobei auch eine zwei- oder mehrflügelige Ausgestaltung des Funktionsabschnitts möglich ist.

Eine Schwenkachse, um die der Funktionsabschnitt relativ zu dem Basisabschnitt verschwenkbar ist, kann oberhalb oder unterhalb einer Drehachse des Sägeblatts liegen. Alternativ oder zusätzlich kann die Schwenkachse bezüglich der Vorschubrichtung vor oder hinter der Drehachse des Sägeblatts liegen.

In einer Ausgestaltung sind der Basisabschnitt und der Funktionsabschnitt als Halbschalen ausgebildet, die bei in der Schließstellung befindlichem Funktionsabschnitt das Gehäuse bilden.

In einer weiteren Ausführungsform der Erfindung ist vorgesehen, dass der Basisabschnitt und der Funktionsabschnitt einen innerhalb des Gehäuses gelegenen Späneraum begrenzen, in den im Sägebetrieb Sägespäne gelangen und der sich bezüglich einer Drehachse des Sägeblatts auf beiden Seiten des Sägeblatts erstreckt. Hierdurch können die beim Sägen erzeugten Sägespäne weitgehend ungehindert und damit schnell und zuverlässig von dem Ort ihrer Entstehung weg in das Innere des Gehäuses gelangen, was eine besonders wirksame Späneentsorgung ermöglicht.

Bevorzugt bildet im Wesentlichen das gesamte von dem Gehäuse begrenzte Volumen den Späneraum. Von dem Sägeblatt und gegebenenfalls im Gehäuse befindlichem Zubehör abgesehen, steht somit praktisch das gesamte Gehäuse zur Verfügung.

Das Gehäuse kann wenigstens eine Öffnung aufweisen, über welche im Sägebetrieb bei in der Schließstellung befindlichem Funktionsabschnitt Sägespäne abgesaugt werden können. Die Öffnung kann entweder ausschließlich von dem Basisabschnitt oder dem Funktionsabschnitt oder von beiden Abschnitten zusammen begrenzt sein.

Des Weiteren kann erfindungsgemäß vorgesehen sein, dass in das Gehäuse ein Sauganschluss mündet, über den im Sägebetrieb ein Unterdruck zum Absaugen von Sägespänen anlegbar ist. Der Sauganschluss kann als kurzes Rohrstück oder Anschlussstutzen ausgebildet sein, das bzw. der entweder einstückig mit dem Basisabschnitt oder dem Funktionsabschnitt ausgebildet oder als separates, am Basisabschnitt oder am Funktionsabschnitt befestigtes Bauteil vorgesehen ist.

Gemäß einer Weiterbildung der Erfindung ist eine Schutzeinrichtung vorgesehen, die in der Lage ist, einen unverschlossenen Zustand des Gehäuses und/oder eine aufgehobene oder entsicherte Verriegelung des Funktionsabschnitts zu detektieren und bei Detektion eines solchen unsicheren Zustands einen Antrieb des Sägeblatts zu unterbrechen oder zu unterbinden. Eine versehentliche Inbetriebnahme der Säge bei geöffnetem Gehäuse wird hierdurch sicher verhindert. Die Schutzeinrichtung kann grundsätzlich an einer beliebigen Stelle des Antriebsstrangs wirksam sein, wobei ein Einwirken auf den Antriebsstrang auf elektrischem oder mechanischem Wege erfolgen kann. Beispielsweise kann die Schutzeinrichtung mit einer Schalteinrichtung, mit welcher der Benutzer die Säge ein- und ausschaltet, elektrisch und/oder mechanisch zusammenwirken.

Bevorzugt ist der Funktionsabschnitt des Gehäuses in der Schließstellung verriegelbar, wobei die Verriegelung werkzeuglos aufhebbar ist. Hierdurch wird die Handhabbarkeit der Säge weiter vereinfacht.

Es kann des Weiteren vorgesehen sein, dass ein insbesondere durch Bewegen des Funktionsabschnitts erfolgendes Öffnen des Gehäuses durch eine Schutzeinrichtung unterbunden ist, solange die Antriebseinheit aktiv ist oder solange das Sägeblatt rotiert. Dabei kann die Schutzeinrichtung für einen Nachlaufschutz sorgen, indem sie das Öffnen des Gehäuses auch dann unterbindet, wenn die Antriebseinheit bereits inaktiv, das Sägeblatt aber noch nicht zum Stillstand gekommen ist.

Gemäß einer weiteren Ausführungsform ist der Funktionsabschnitt mit einer Einrichtung zur Halterung und/oder Aufbewahrung von Zubehör, insbesondere eines Ersatz-Sägeblatts, versehen. Die Aufteilung des Gehäuses in einen Basisabschnitt und einen Funktionsabschnitt kann somit in vorteilhafter Weise dazu genutzt werden, lose Teile in nicht störender und gleichzeitig leicht zugänglicher Weise an der Säge selbst unterzubringen.

Die Erfindung wird nachstehend rein beispielhaft anhand der Zeichnung beschrieben. Es zeigen:
- Fig. 1: schematisch eine gemäß der Erfindung ausgebildete Handkreissäge in einer der Vorschubrichtung entgegen gerichteten Ansicht, und
- Fig. 2: schematisch eine Ausführungsform eines Sicherheitskonzeptes einer erfindungsgemäßen Handkreissäge.

Die erfindungsgemäße Handkreissäge umfasst ein Sägeblatt 11 und eine Antriebseinheit 13, mit der das Sägeblatt 11 zur Rotation um eine Drehachse 23 antreibbar ist. Mit der Antriebseinheit 13 ist ein Griff 37 verbunden, über den ein Benutzer die Säge führt. Des Weiteren ist ein Gehäuse 15, 17 vorgesehen, welches das Sägeblatt 11 teilweise umgibt.

Die Einheit aus Antriebseinheit 13, Sägeblatt 11 und Gehäuse 15, 17 ist zur Ausführung von Neigungs- oder Schrägschnitten relativ zu einer Grundplatte 39 verschwenkbar, mit welcher die Säge während des Betriebs auf einem Werkstück oder auf einem weiteren Bauteil, beispielsweise einer Führungsschiene, aufliegt. Die Grundplatte 39 ist mit einer Führung 43 versehen, die in diesem Ausführungsbeispiel als kreisbogenförmiger Führungsschlitz ausgebildet ist, in dem ein mit der verschwenkbaren Einheit verbundenes Führungselement 41 zwangsgeführt ist.

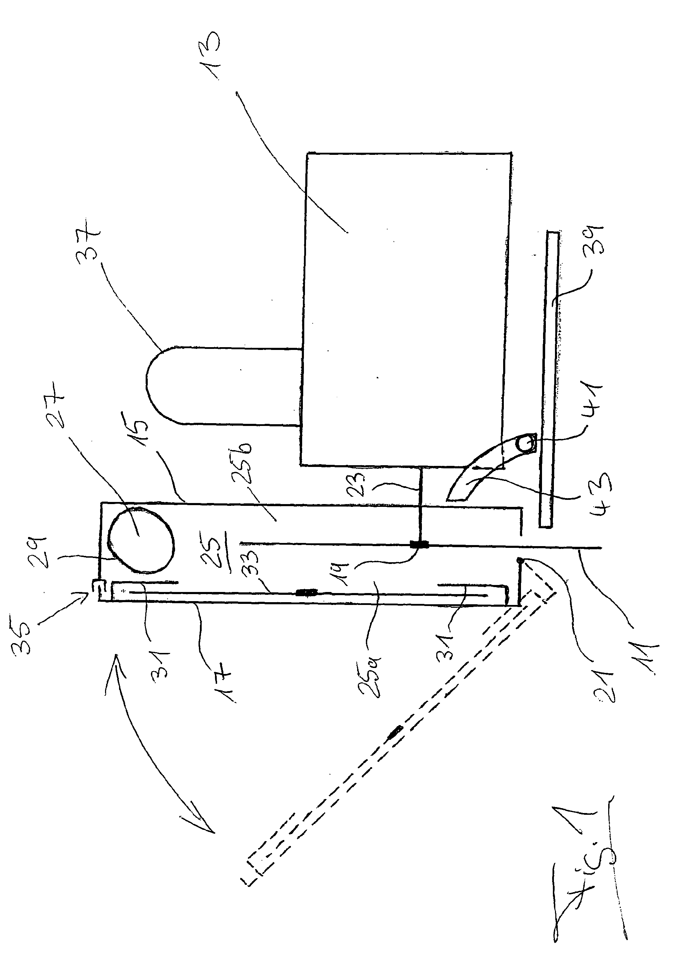

Das Gehäuse ist mehrteilig ausgeführt und umfasst einen bezüglich der Antriebseinheit 13 feststehenden Basisabschnitt 15 und einen Funktionsabschnitt 17, der relativ zu dem Basisabschnitt 15 um eine Achse 21 verschwenkbar ist, und zwar zwischen einer in Fig. 1 mit durchgezogenen Linien dargestellten Schließstellung und einer gestrichelt dargestellten Öffnungsstellung. In Fig. 1 ist ein Schwenkbereich von etwa 45° angedeutet, wobei auch kleinere oder größere maximale Schwenkbewegungen möglich sind.

Der Basisabschnitt 15 und der Funktionsabschnitt 17 sind jeweils halbschalenförmig ausgebildet. In der Schließstellung des Funktionsabschnitts 17 ist das Gehäuse geschlossen. Eine zwischen dem Basisabschnitt 15 und dem Funktionsabschnitt 17 wirksame Verriegelung 35 verhindert ein unbeabsichtigtes Öffnen des Gehäuses. Die Verriegelung 35 kann zum Öffnen des Gehäuses werkzeuglos aufgehoben werden. Hierzu wird auf die nachstehenden Ausführungen zu einem an der Säge vorgesehenen Sicherheitskonzept verwiesen.

Bei in der Öffnungsstellung befindlichem Funktionsabschnitt 17 liegt das Sägeblatt 11 vollkommen frei. Das Sägeblatt 11 und insbesondere ein Befestigungsbereich 19, an welchem das Sägeblatt 11 an einer die Drehachse 23 definierenden Antriebswelle der Antriebseinheit 13 angebracht ist, sind bei geöffnetem Gehäuse unmittelbar zugänglich. Das Abnehmen des Sägeblatts 11 beispielsweise zum Zwecke eines erforderlichen Sägeblattwechsels ist daher für den Benutzer nur mit einem Minimum an Handgriffen verbunden, da lediglich der Funktionsabschnitts 17 in die geöffnete Stellung geschwenkt zu werden braucht, woraufhin die dann unmittelbar zugängliche Sägeblattbefestigung 19 gelöst werden kann.

Bei der Sägeblattbefestigung 19 handelt es sich insbesondere um eine werkzeuglos betätigbare Schnellspanneinrichtung, bei der z.B. mittels eines Hebels eine beispielsweise als Federpaket ausgebildete Federanordnung zwischen einer Lösestellung und einer Spannstellung verstellt werden kann. In der Lösestellung kann eine einfach mit der Hand drehbare Schraube vollständig gelöst werden, um das zu wechselnde Sägeblatt entfernen zu können. Nach dem Einsetzen des neuen Sägeblatts wird die Schraube wiederum einfach per Hand festgezogen. Durch Verstellen der Federanordnung zurück in die Spannstellung sorgt die nunmehr voll wirksame Federkraft für die endgültige Einspannung des Sägeblatts. Dabei kann vorgesehen sein, dass mit der Spannstellung, insbesondere mit einem letzten Stellhub, eine Formschlussverbindung hergestellt wird, die ein Drehen der Schraube verhindert, wobei die Formschlussverbindung durch Verstellen der Federanordnung in die Lösestellung aufgehoben wird.

Bei geschlossenem Gehäuse unterteilt das Sägeblatt 11 das Innere des Gehäuses in einen vorderen Bereich 25a und einen hinteren Bereich 25b, die gemeinsam einen zusammenhängenden Späneraum 25 bilden, in den beim Sägen erzeugte Sägespäne gelangen. In den Späneraum 25 mündet eine Gehäuseöffnung 27, die in diesem Ausführungsbeispiel von einem als Sauganschluss dienenden Anschlussstutzen 29 gebildet ist, der als separates Bauteil ausgeführt und an dem bezüglich der Antriebseinheit 13 feststehenden Basisabschnitt 15 des Gehäuses befestigt ist.

Der verschwenkbare Funktionsabschnitt 17 dient außerdem zur Aufbewahrung eines Ersatz-Sägeblatts 33 und ist mit Halterungen 31 versehen, die eine spielfreie Anbringung Ersatz-Sägeblatts 33 und/oder gegebenenfalls vorgesehenen Zubehörs insbesondere in Form loser Teile an der Innenseite des Funktionsabschnitts 17 gewährleisten, so dass der Sägebetrieb nicht beeinträchtigt wird und insbesondere störende Geräuschentwicklungen unterbunden werden.

Die erfindungsgemäße Handkreissäge ist als Tauchsäge ausgebildet, d.h. das Sägeblatt 11 ist zusammen mit der Antriebseinheit 13 zu einer um eine nicht dargestellte Schwenkachse erfolgenden Tauchbewegung relativ zu der Grundplatte 39 in der Lage. Das Gehäuse 15, 17 dagegen macht die Tauchbewegung nicht mit, ist also insofern, d.h. hinsichtlich der Tauchfunktion der Säge, relativ zu der Grundplatte 39 feststehend angeordnet. Hierin unterscheidet sich die Säge von anderen Tauchsägen, bei denen das Gehäuse zumindest teilweise an der Tauchbewegung des Sägeblatts teilnimmt, wobei die Erfindung aber prinzipiell auch in Verbindung mit derartigen Tauchsägen realisierbar ist.

Zur Ausführung von Schräg- oder Neigungsschnitten ist das Gehäuse 15, 17 zusammen mit dem Sägeblatt 11 und der Antriebseinheit 13 um eine weitere, nicht dargestellt Schwenkachse relativ zu der Grundplatte 39 bewegbar.

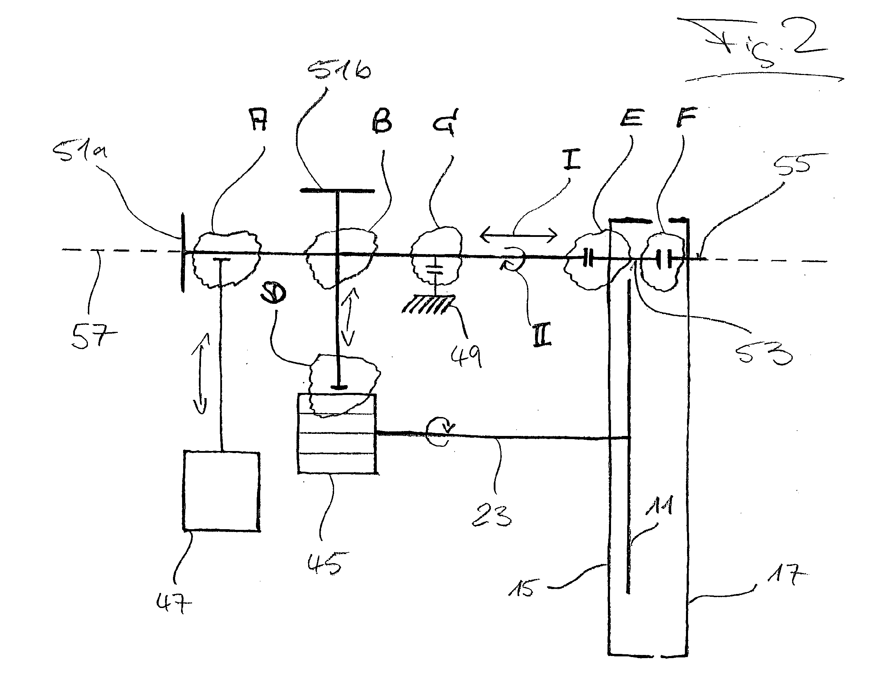

Das anhand von Fig. 2 lediglich schematisch dargestellte Sicherheitskonzept stellt sicher, dass trotz der erfindungsgemäßen Möglichkeit, das Gehäuse 15, 17 zu öffnen, zu jedem Zeitpunkt die Sicherheit des Benutzers gewährleistet ist. Hierzu ist eine zweiteilige Sicherheitseinheit 51a, 51b vorgesehen, die von dem Benutzer zwischen einer Schließstellung, in der das Gehäuse geschlossen ist und nicht geöffnet werden kann, und einer Öffnungsstellung bewegbar ist, in der ein Öffnen des Gehäuses möglich ist. Die Sicherheitseinheit 51a, 51b wirkt in einem Bereich A mit einem Schalter 47 zum Ein- und Ausschalten der Säge, in einem Bereich D mit einem sich von der Antriebseinheit 13 (Fig. 1) bis zum Sägeblatt 11 erstreckenden Antriebsstrang 45, beispielsweise mit einem Lüfterrad, und in einem Bereich E mit einer Schloss/Riegel-Anordnung 53, 55 des Gehäuses zusammen, wobei z.B. das Schloss 53 am Basisabschnitt 15 und der Riegel 55 am Funktionsabschnitt 17 angebracht ist.

Die Sicherheitseinheit umfasst einen Schieber 51a und einen Hebel 51b. Der Schieber 51a ist längs einer zentralen Achse 57 verschiebbar (Komponente I der Verstellbewegung) und um die zentrale Achse 57 drehbar (Komponente I der Verstellbewegung). Der Hebel 51b ist ebenfalls um die zentrale Achse 57 drehbar und in einem Bereich B mit dem Schieber 51 a derart drehfest gekoppelt, dass der Schieber 51a und der Hebel 51b nur gemeinsam um die zentrale Achse 57 gedreht werden können, ein Verschieben des Schiebers 51a längs der zentralen Achse 57 relativ zu dem Hebel 51b aber möglich ist.

Das Schloss 53 ist ebenfalls um die zentrale Achse 57 drehbar, und zwar relativ zu dem stationären Basisabschnitt 15. Das Schloss 53 und der Riegel 55 wirken in einem Bereich F derart zusammen, dass in einer ersten Drehstellung des Schlosses 53 der Riegel 55 am Schloss 53 verriegelt ist, so dass der Funktionsabschnitt 17 nicht verschwenkt und somit das Gehäuse nicht geöffnet werden kann, und dass in einer zweiten Drehstellung des Schlosses 53 der Riegel 55 freigegeben ist, um ein Öffnen des Gehäuses zu ermöglichen.

In einem Bereich C wirkt der Schieber 51a außerdem mit einem Blockier-abschnitt 49 zusammen, der bei in der Schließstellung befindlichem Schieber 51a eine Drehung des Schiebers 51a um die zentrale Achse 57 verhindert, so dass der Benutzer den Schieber 51a nur dann mittels des Hebels 51b um die zentrale Achse 57 drehen und somit in die Öffnungsstellung bewegen kann, wenn zuvor der Schieber 51a längs der zentralen Achse 57 verschoben wurde, um die Drehblockierung durch den Blockierabschnitt 49 aufzuheben.

Bei dem Schieber 51a kann es sich insbesondere um ein knopfartig ausgebildetes Betätigungsorgan handeln, das zum Herstellen der Öffnungsstellung von dem Benutzer gedrückt werden muss (Komponente I), während der Hebel 51b als Schwenkhebel ausgebildet sein kann, der zum Herstellen der endgültigen Öffnungsstellung von dem Benutzer verschwenkt werden muss, um den zuvor eingedrückten Knopf 51a um die zentrale Achse 57 zu drehen (Komponente II). Durch Verschwenken des Hebels 51b von der Schließstellung in die Öffnungsstellung wird nicht nur der Schieber 51a durch Drehen um die zentrale Achse 57 in die Öffnungsstellung gedreht, sondern gelangt außerdem der Hebel 51b in Blockiereingriff mit dem Antriebsstrang 45, insbesondere einem Lüfterrad, wodurch eine Drehung der Antriebsachse 23 des Sägeblatts 11 und damit des Sägeblatts 11 unterbunden wird.

Anstelle dieser zweiteiligen Ausgestaltung der Sicherheitseinheit 51a, 51b ist auch eine einteilige Ausführung denkbar, z.B. in Form eines kombinierten Schiebe/Dreh-Organs, das vom Benutzer gleichzeitig längs der zentralen Achse 57 verschoben und um die zentrale Achse 57 gedreht wird, so dass die beiden Komponenten I und II der Verstellbewegung der Sicherheitseinheit nicht zeitlich nacheinander, sondern gleichzeitig erfolgen.

Der Schieber 51a wirkt mit dem Schalter 47 derart zusammen, dass eine Betätigung des Schalters 47 nur bei in der Schließstellung befindlichem Schieber 51a und ein Verstellen des Schiebers 51a in die Öffnungsstellung nur bei in einer Aus-Stellung befindlichem Schalter 47 zugelassen ist. Einerseits ist hierdurch sichergestellt, dass bei geöffnetem Gehäuse der Benutzer die Säge nicht einschalten kann. Andererseits ist gewährleistet, dass das Gehäuse nur bei ausgeschalteter Säge geöffnet werden kann.

Hierzu kann beispielsweise der Schieber 51a mit einer sich nur über einen Teil seines Umfangs erstreckenden Schlitzaussparung versehen sein, in welche der Schalter 47 zum Einschalten der Säge eingreifen muss und die derart angeordnet und ausgebildet ist, dass sie bei in der Öffnungsstellung befindlichem Schieber 51a nicht mit dem Schalter 47 in Eingriff gebracht werden kann.

Der Schieber 51a wirkt mit dem Schloss 53 derart zusammen, dass zunächst durch Verschieben des Schiebers 51a (Komponente I) eine Drehkoppelung mit dem sich in der vorstehend erwähnten ersten Drehstellung, in welcher das Gehäuse geschlossen und der Riegel 55 verriegelt ist, befindlichem Schloss 53 hergestellt und anschließend durch Drehen des Schiebers 51a um die zentrale Achse 57 (Komponente II) das Schloss 53 in die zweite Drehstellung gedreht wird, wodurch der Riegel 55 freigegeben wird und das Gehäuse geöffnet werden kann. Außerdem wirkt der Schieber 51a mit dem Schloss 53 derart zusammen, dass ein Zurückdrehen des Schlosses 53 und somit auch des Schiebers 51a blockiert ist, solange das Gehäuse geöffnet und somit der Riegel 55 nicht in Eingriff mit dem Schloss 53 gelangt ist.

Hierzu kann das Schloss 53 mit einem z.B. eine oder mehrere federbelastete Kugeln oder andere bewegbare Blockierelemente umfassenden Blockiermechanismus versehen sein, der durch Öffnen des Gehäuses, d.h. durch Entfernen des Riegels 55, im Sinne einer Drehblockierung des Schlosses 53 aktiviert wird, indem die Kugel durch die Federkraft des Blockiermechanismus radial nach außen gedrängt und so mittels der Kugel eine drehfeste Koppelung zwischen dem Schloss 53 und einem feststehenden Abschnitt des stationären Basisabschnitts 15 hergestellt wird. Durch Schließen des Gehäuses, d.h. durch Einführen des Riegels 55 in das Schloss 55, wird entgegen der Federkraft des Blockiermechanismus die Kugel freigegeben, so dass das Schloss 53 und somit der Schieber 51a wieder gedreht werden können.

Ein Vorteil der Erfindung, der durch die Möglichkeit, das Gehäuse für einen Sägeblattwechsel zu öffnen, begründet ist, besteht insbesondere darin, dass das Sägeblatt nicht in eine spezielle Werkzeugwechselstellung "getaucht" zu werden braucht. Vielmehr kann der Sägeblattwechsel bei vollständig "aufgetauchtem" Sägeblatt erfolgen, d.h. die Säge kann bei einem Sägeblattwechsel stehen bleiben, da das Gehäuse bei stehender Säge geöffnet werden kann, was die Handhabbarkeit der erfindungsgemäßen Handkreissäge insbesondere im Hinblick auf einen Sägeblattwechsel erheblich vereinfacht.

### Bezugszeichenliste

- 11: Sägeblatt
- 13: Antriebseinheit
- 15: Basisabschnitt
- 17: Funktionsabschnitt
- 19: Befestigungsbereich
- 21: Schwenkachse
- 23: Drehachse
- 25: Späneraum
- 25a: vorderer Bereich des Späneraumes
- 25b: hinterer Bereich des Späneraumes
- 27: Öffnung
- 29: Sauganschluss, Anschlussstutzen
- 31: Halteeinrichtung
- 33: Ersatz-Sägeblatt
- 35: Verriegelung
- 37: Griff
- 39: Grundplatte
- 41: Führungselement
- 43: Führung
- 45: Antriebsstrang, Lüfterrad
- 47: Schalter
- 49: Blockierabschnitt
- 51a: Schieber
- 51b: Hebel
- 53: Schloss
- 55: Riegel
- 57: zentrale Achse

- I, II: Bewegung
- A - F: Bereich

## Patentansprüche

1. Handkreissäge, insbesondere Tauchsäge oder Pendelhaubensäge, mit
einem Sägeblatt (11),
einer Antriebseinheit (13) für das Sägeblatt (11) und
einem das Sägeblatt (11) wenigstens teilweise umgebenden Gehäuse, das zumindest einen Funktionsabschnitt (17) umfasst, der relativ zu einem Basisabschnitt (15) der Säge zwischen einer Öffnungsstellung, in der ein Befestigungsbereich (19) des Sägeblatts (11) zugänglich ist, und einer Schließstellung bewegbar ist.

2. Handkreissäge nach Anspruch 1,
**dadurch gekennzeichnet,**
**dass** das Gehäuse zumindest zweiteilig ausgebildet ist und zusätzlich zu dem Funktionsabschnitt (17) wenigstens einen stationären Basisabschnitt (15) umfasst, relativ zu welchem der Funktionsabschnitt (17) zwischen einer Schließstellung, in der das Gehäuse geschlossen ist, und einer Öffnungsstellung bewegbar ist, in welcher der Befestigungsbereich (19) des Sägeblatts (11) zugänglich ist.

3. Handkreissäge nach Anspruch 1 oder 2,
**dadurch gekennzeichnet,**
**dass** die Handkreissäge als Tauchsäge ausgebildet und das Sägeblatt (11) zu einer Tauchbewegung relativ zu einer Grundplatte (39) der Säge in der Lage ist, wobei das Gehäuse während der Tauchbewegung des Sägeblatts (11) relativ zu der Grundplatte (39) feststehend angeordnet ist.

4. Handkreissäge nach einem der vorhergehenden Ansprüche,
**dadurch gekennzeichnet,**
**dass** bei in der Öffnungsstellung befindlichem Funktionsabschnitt (17) der Befestigungsbereich (19) des Sägeblatts (11) unmittelbar zugänglich ist.

5. Handkreissäge nach einem der vorhergehenden Ansprüche,
**dadurch gekennzeichnet,**
**dass** der Funktionsabschnitt (17) unverlierbar angebracht ist.

6. Handkreissäge nach einem der vorhergehenden Ansprüche,
**dadurch gekennzeichnet,**
**dass** der Funktionsabschnitt (17) relativ zu dem Basisabschnitt (15) verschwenkbar ist.

7. Handkreissäge nach einem der vorhergehenden Ansprüche,
**dadurch gekennzeichnet,**
**dass** eine Schwenkachse (21), um die der Funktionsabschnitt (17) relativ zu dem Basisabschnitt (15) verschwenkbar ist, oberhalb oder unterhalb einer Drehachse (23) des Sägeblatts (11) liegt.

8. Handkreissäge nach einem der vorhergehenden Ansprüche,
**dadurch gekennzeichnet,**
**dass** eine Schwenkachse (21), um die der Funktionsabschnitt (17) relativ zu dem Basisabschnitt (15) verschwenkbar ist, bezüglich der Vorschubrichtung vor oder hinter einer Drehachse (23) des Sägeblatts (11) liegt.

9. Handkreissäge nach einem der vorhergehenden Ansprüche,
**dadurch gekennzeichnet,**
**dass** der Funktionsabschnitt (17), insbesondere zusammen mit dem Basisabschnitt (15), einen innerhalb des Gehäuses gelegenen Späneraum (25) begrenzt, in den im Sägebetrieb Sägespäne gelangen und der sich bezüglich einer Drehachse (23) des Sägeblatts (11) auf beiden Seiten des Sägeblatts (11) erstreckt.

10. Handkreissäge nach einem der vorhergehenden Ansprüche,
**dadurch gekennzeichnet,**
**dass** der Basisabschnitt (15) und der Funktionsabschnitt (17) als Halbschalen ausgebildet sind, die bei in der Schließstellung befindlichem Funktionsabschnitt (17) das Gehäuse bilden.

11. Handkreissäge nach einem der vorhergehenden Ansprüche,
**dadurch gekennzeichnet,**
**dass** das Gehäuse wenigstens eine Öffnung (27) aufweist, über welche im Sägebetrieb bei in der Schließstellung befindlichem Funktionsabschnitt (17) Sägespäne abgesaugt werden.

12. Handkreissäge nach einem der vorhergehenden Ansprüche,
**dadurch gekennzeichnet,**
**dass** in das Gehäuse ein Sauganschluss (29) mündet, über den im Sägebetrieb ein Unterdruck zum Absaugen von Sägespänen anlegbar ist.

13. Handkreissäge nach einem der vorhergehenden Ansprüche,
**dadurch gekennzeichnet,**
**dass** eine von einem Benutzer durch Betätigung zwischen einer Schließstellung, in der das Gehäuse geschlossen und ein Öffnen des Gehäuses unterbunden ist, und einer Öffnungsstellung, in der ein Öffnen des Gehäuses möglich ist, bewegbare Sicherheitseinheit (51a, 51b) vorgesehen ist, die (A) mit einem Schalter (47) zum Ein- und Ausschalten der Säge, (D) mit einem sich von der Antriebseinheit (13) bis zum Sägeblatt (11) erstreckenden Antriebsstrang (45) und (E) mit einer Schloss/Riegel-Anordnung (53, 55) des Gehäuses zusammenwirkt.

14. Handkreissäge nach Anspruch 13,
**dadurch gekennzeichnet,**
**dass** die Verstellbewegung der Sicherheitseinheit (51a, 51b) eine Linearbewegung (I) und eine Drehbewegung (II) umfasst.

15. Handkreissäge nach Anspruch 13 oder 14,
**dadurch gekennzeichnet,**
**dass** die Sicherheitseinheit mehrteilig ausgebildet ist, wobei ein insbesondere als Schieber (51a) ausgebildeter erster Teil zu einer ersten Komponente der Verstellbewegung, insbesondere einer Linearbewegung (I), und ein insbesondere als Hebel (51b) ausgebildeter zweiter Teil zu einer zweiten Komponente der Verstellbewegung, insbesondere einer Drehbewegung (II), ausgebildet ist.

16. Handkreissäge nach einem der Ansprüche 13 bis 15,
**dadurch gekennzeichnet,**
**dass** eine zweite Komponente (II) der Verstellbewegung der Sicherheitseinheit (51a, 51b), die insbesondere für das Zusammenwirken der Sicherheitseinheit (51a, 51b) mit dem Antriebsstrang (45) vorgesehen ist, nicht ohne vorherige Ausführung einer ersten Komponente (I) der Verstellbewegung möglich ist.

17. Handkreissäge nach einem der Ansprüche 13 bis 16,
**dadurch gekennzeichnet,**
**dass** die Sicherheitseinheit (51a, 51b) mit dem Schalter (47) derart zusammenwirkt, dass eine Betätigung des Schalters (47) nur bei in der Schließstellung befindlicher Sicherheitseinheit (51a, 51b) und ein Verstellen der Sicherheitseinheit (51a, 51b) in die Öffnungsstellung nur bei in einer Aus-Stellung befindlichem Schalter (47) zugelassen ist.

18. Handkreissäge nach einem der Ansprüche 13 bis 17,
**dadurch gekennzeichnet,**
**dass** die Sicherheitseinheit (51a, 51b) mit der Schloss/Riegel-Anordnung (53, 55) derart zusammenwirkt, dass ein Öffnen des Gehäuses nur bei in der Öffnungsstellung befindlicher Sicherheitseinheit (51a, 51b) und ein Verstellen der Sicherheitseinheit (51a, 51b) in die Schließstellung nur bei geschlossenem Gehäuse zugelassen ist.

19. Handkreissäge nach einem der Ansprüche 13 bis 18,
**dadurch gekennzeichnet,**
**dass** die Säge als Tauchsäge ausgebildet und die Sicherheitseinheit (51a, 51b) tauchzustandssensitiv ist.

20. Handkreissäge nach Anspruch 19,
**dadurch gekennzeichnet,**
**dass** die Sicherheitseinheit (51a, 51b) nur im vollständig aufgetauchten Zustand in die Öffnungsstellung bewegbar ist.

21. Handkreissäge nach einem der vorhergehenden Ansprüche,
**dadurch gekennzeichnet,**
**dass** der Funktionsabschnitt (17) mit einer Einrichtung (31) zur Halterung und/oder Aufbewahrung von Zubehör, insbesondere eines Ersatz-Sägeblatts (33), versehen ist.

22. Handkreissäge nach einem der vorhergehenden Ansprüche,
**dadurch gekennzeichnet,**
**dass** genau ein Basisabschnitt (15) und genau ein Funktionsabschnitt (17) vorgesehen sind.
